# EUROPEAN PATENT APPLICATION

(11) **EP 4 641 275 A1**
(43) Date of publication of application: **29.10.2025**
(21) Application number: 22969122.5
(22) Date of filing: 19.12.2022
(51) Int. Cl.: G02B 6/44

(54) **OPTICAL FIBER CABLE AND INFORMATION MANAGEMENT METHOD FOR OPTICAL FIBER CABLE**

(71) Applicant: SUMITOMO ELECTRIC INDUSTRIES, LTD., Osaka-shi, Osaka 541-0041 (JP)
(72) Inventor: SATO, Fumiaki, Osaka-shi, Osaka 541-0041 (JP); INAI, Maki, Osaka-shi, Osaka 541-0041 (JP); KIMURA, Toyoaki, Osaka-shi, Osaka 541-0041 (JP); SUZUKI, Yohei, Osaka-shi, Osaka 541-0041 (JP)
(74) Representative: Müller-Boré & Partner Patentanwälte PartG mbB
(86) International application number: PCT/JP2022/046705
(87) International publication number: WO 2024/134733

(57) **Abstract**

An optical fiber cable includes a cable core and a sheath formed around the cable core, a dynamic friction coefficient between optical fiber cables is 0.5 or less, and information related to the optical fiber cable is laser-engraved on the sheath.

## Description

### TECHNICAL FIELD

The present disclosure relates to an optical fiber cable and an information management method for the optical fiber cable.

### BACKGROUND ART

In the related art, a technique for checking information related to an optical fiber cable, such as information related to installation of the optical fiber cable, has been developed. For example, Patent Literature 1 discloses a method of encoding and recording, on an installed optical cable, information related to installation of the optical cable, and reading out the information related to the installation of the optical cable at a site where the optical cable is installed.

### CITATION LIST

### PATENT LITERATURE

Patent Literature 1: JP2001-021730A

### SUMMARY OF INVENTION

An optical fiber cable according to an aspect of the present disclosure is an optical fiber cable including: a cable core; and a sheath formed around the cable core, in which: a dynamic friction coefficient between optical fiber cables is 0.5 or less; and information related to the optical fiber cable is laser-engraved on the sheath.

An information management method for an optical fiber cable according to an aspect of the present disclosure is an information management method for an optical fiber cable, the optical fiber cable including a cable core and a sheath formed around the cable core, a dynamic friction coefficient between optical fiber cables being 0.5 or less, cable information related to the optical fiber cable being laser-engraved on the sheath, the information management method including: a step of reading the cable information; and a step of displaying the cable information.

### BRIEF DESCRIPTION OF DRAWINGS

[FIG. 1] FIG. 1 is a diagram illustrating an example of a configuration of an optical fiber cable according to an embodiment of the present disclosure.
[FIG. 2] FIG. 2 is a diagram illustrating an example of a method of reading cable information stored in a code illustrated in FIG. 1.
[FIG. 3] FIG. 3 is a flowchart illustrating an example of a flow of an operation of reading the cable information stored in the code illustrated in FIG. 1.

### DESCRIPTION OF EMBODIMENTS

### [Technical Problem]

In the method described in Patent Literature 1, a printing paper is attached to a sheath of the optical cable. However, in an optical fiber cable or the like installed by air pumping, there is a possibility that the printing paper attached to the sheath is likely to be rubbed and peeled off at the time of installation or the like.

An object of the present disclosure is to provide an optical fiber cable in which information related to the optical fiber cable can be easily checked and identifiability of the information can be ensured, and an information management method for the optical fiber cable.

### [Advantageous Effects of Present Disclosure]

According to the present disclosure, the information related to the optical fiber cable can be easily checked, and the identifiability of the information can be ensured.

### (Description of Embodiment of Present Disclosure)

First, aspects of the present disclosure will be listed and described.

An optical fiber cable according to an aspect of the present disclosure is
(1) an optical fiber cable including: a cable core; and a sheath formed around the cable core, in which: a dynamic friction coefficient between optical fiber cables is 0.5 or less; and information related to the optical fiber cable is laser-engraved on the sheath.
   As described above, since the optical fiber cable has the dynamic friction coefficient of 0.5 or less, it is easy to lay the optical fiber cable by air pumping or pulling. In addition, even when the optical fiber cable is installed by the air pumping, pulling, or the like, since the information related to the optical fiber cable is attached by forming unevenness on the sheath by the laser engraving, it is possible to prevent the engraving from disappearing due to friction or the like at the time of installation. Therefore, the information related to the optical fiber cable can be easily checked, and identifiability of the information can be ensured.
(2) In the optical fiber cable according to the above-described (1), the dynamic friction coefficient may be 0.3 or less.
   Thus, it is particularly effective in an optical fiber cable having a lower dynamic friction coefficient.
(3) In the optical fiber cable according to the above-described (1) or (2), a two-dimensional code configured to store the information related to the optical fiber cable may be laser-engraved on the sheath.
   With such a configuration, for example, it is possible to present a large amount of information by engraving, in a form of the two-dimensional code, a URL of a WEB page in which the information related to the optical fiber cable is described, or the like.
(4) In the optical fiber cable according to any one of the above-described (1) to (3), the sheath may be made of a material in which an additive amount of carbon is smaller than 2 mass%.
   With such a configuration, it is possible to make the engraving attached to the sheath more visible.
(5) In the optical fiber cable according to any one of the above-described (1) to (4), the sheath may be made of a material in which an additive amount of silicone is in a range of 0.1 mass% to 0.5 mass%.
   With such a configuration, for example, when the optical fiber cable is installed by the air pumping, the sheaths can be made slippery in a state in which the sheaths are in contact with each other, and thus an installation work is easily performed.
(6) In the optical fiber cable according to any one of the above-described (1) to (5), the sheath may be made of a material to which a laser photosensitizer is added.
   With such a configuration, the laser engraving can be performed on the sheath by illuminating the sheath with laser light.
(7) In the optical fiber cable according to any one of the above-described (1) to (6), information related to installation of the optical fiber cable may be laser-engraved on the sheath.

With such a configuration, it is possible to provide useful information to a worker at the time of installation of the optical fiber cable.

An information management method for an optical fiber cable according to an aspect of the present disclosure is
(8) an information management method for an optical fiber cable, the optical fiber cable including a cable core and a sheath formed around the cable core, a dynamic friction coefficient between optical fiber cables being 0.5 or less, cable information related to the optical fiber cable being laser-engraved on the sheath, the information management method including: a step of reading the cable information; and a step of displaying the cable information.

As described above, since the optical fiber cable has the dynamic friction coefficient of 0.5 or less, it is easy to lay the optical fiber cable by the air pumping or pulling. In addition, even when the optical fiber cable is installed by the air pumping, pulling, or the like, since the information related to the optical fiber cable is attached by forming unevenness on the sheath by the laser engraving, it is possible to prevent the engraving from disappearing due to friction or the like at the time of installation. Therefore, the information related to the optical fiber cable can be easily checked, and the identifiability of the information can be ensured.

### (Details of Embodiment of Present Disclosure)

A specific example of the optical fiber cable according to an embodiment of the present disclosure will be described below with reference to the drawings. It should be noted that the present disclosure is not limited to these examples, but is indicated by claims, and is intended to include all changes within the meaning and scope equivalent to the claims.

### (Configuration of Optical Fiber Cable)

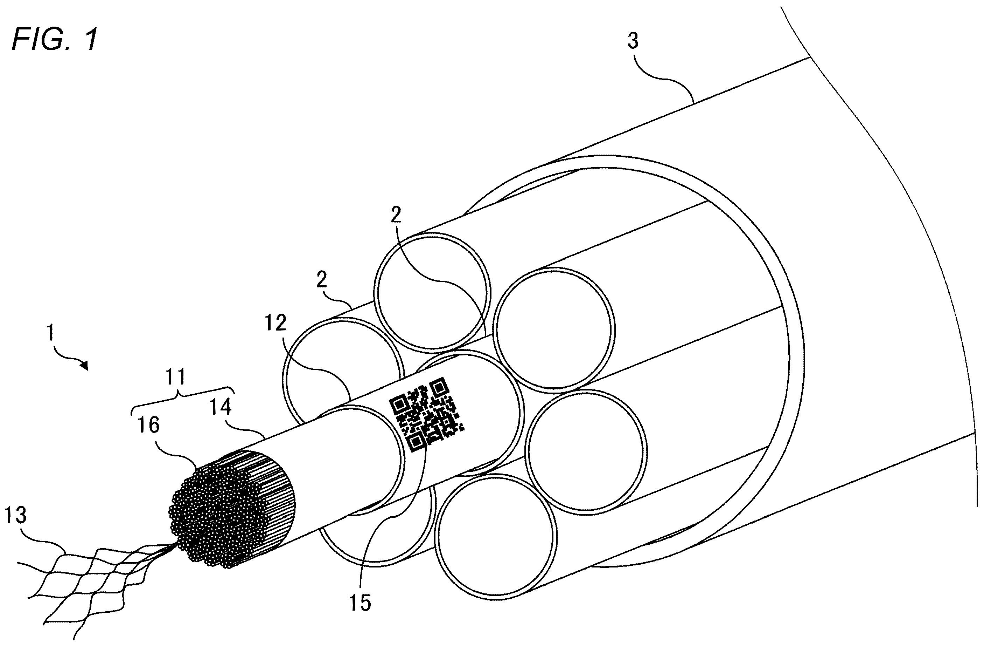

FIG. 1 is a diagram illustrating an example of a configuration of an optical fiber cable 1 according to an embodiment of the present disclosure. FIG. 1 illustrates a state in which each optical fiber cable 1 is installed inside a subduct 2 and a plurality of subducts 2 are installed inside a main duct 3. The optical fiber cable 1 is, for example, a micro duct cable that is installed inside the subduct 2 by air pumping or pulling, and has an outer diameter of about 20 mm. In the optical fiber cable 1 having a small radius of curvature, it is difficult to read a code 15 described later, and thus the outer diameter of the optical fiber cable 1 is preferably 6 mm or more.

The optical fiber cable 1 includes a cable core 11 and a sheath 12 formed around the cable core 11. The cable core 11 includes a plurality of optical fiber ribbons 16 each including optical fibers 13 and a water absorption tape 14 that covers a periphery of the plurality of optical fiber ribbons 16. For example, regarding the optical fibers 13 constituting the optical fiber ribbon 16, adjacent optical fibers 13 may be intermittently coupled to each other along a longitudinal direction of the optical fiber cable 1. The plurality of optical fibers 13 are coupled to each other to form an optical fiber ribbon, but may be separate. The water absorption tape 14 is longitudinally wrapped or helically wrapped around the plurality of optical fiber ribbons 16. The optical fiber cable 1 illustrated in FIG. 1 is a slot-less type, but may be a slot type.

The sheath 12 is made of a resin such as high-density polyethylene (HDPE), and is formed by extrusion molding around the water absorption tape 14. In addition, the sheath 12 is preferably made of a material in which an additive amount of silicone is in a range of 0.1 mass% to 0.5 mass%. In this case, when the optical fiber cable 1 is installed, the sheath 12 can be made slippery in a state in which the sheaths 12 are in contact with each other or in a state in which the sheath 12 and the subduct 2 are in contact with each other, and thus the installation work is easily performed.

A dynamic friction coefficient between the optical fiber cables 1 is 0.5 or less, and more preferably 0.3 or less. As described above, since the dynamic friction coefficient between the optical fiber cables 1 is small, it is easy to perform the installation work by the air pumping, pulling, or the like.

### (Laser Engraving on Sheath)

A code 15 in which information related to the optical fiber cable 1 (hereinafter referred to as "cable information") is stored is laser-engraved on the sheath 12. In an example illustrated in FIG. 1, a QR code (registered trademark) that can record a large amount of information such as characters and numbers and enable high-speed reading by combining white cells and black cells is attached to the sheath 12 as the code 15.

More specifically, for example, a laser photosensitizer is added to the sheath 12. After the sheath 12 is molded, the sheath 12 to which the laser photosensitizer is added is illuminated with laser light, whereby the laser photosensitizer reacts to dent a part of the sheath 12, and the code 15 having high wear resistance is attached to the sheath 12. It is preferable that the code 15 has a color different from a color of the sheath 12. Accordingly, a position to which the code 15 is attached can be easily checked.

The cable information includes, for example, information related to installation of the optical fiber cable 1. Specifically, the cable information includes at least one piece of following information related to the optical fiber cable 1: manufacturing company, manufacturing year, the number of optical fibers, allowable tension, and allowable bending diameter.

The sheath 12 is made of a material in which an additive amount of carbon is larger than 0 mass% and smaller than 2 mass%. When a large amount of carbon is added to the material of the sheath 12, the laser photosensitizer is less likely to react when illuminated with the laser light, and clear engraving is likely not to be performed. Therefore, as described above, the additive amount of the carbon in the sheath 12 is small, so that the code 15 can be clearly engraved on the sheath 12.

### (Flow of Operation of Reading Cable Information )

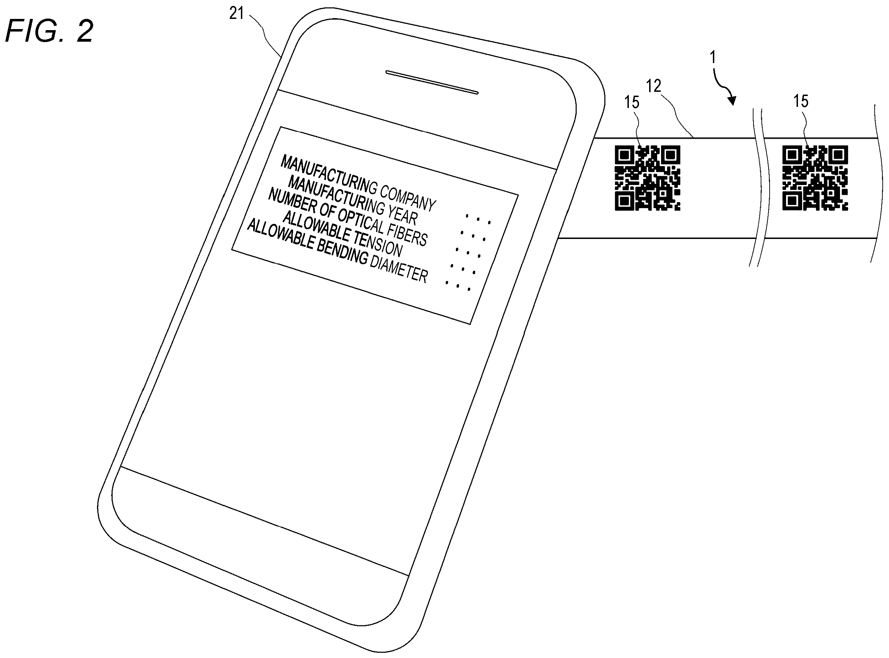

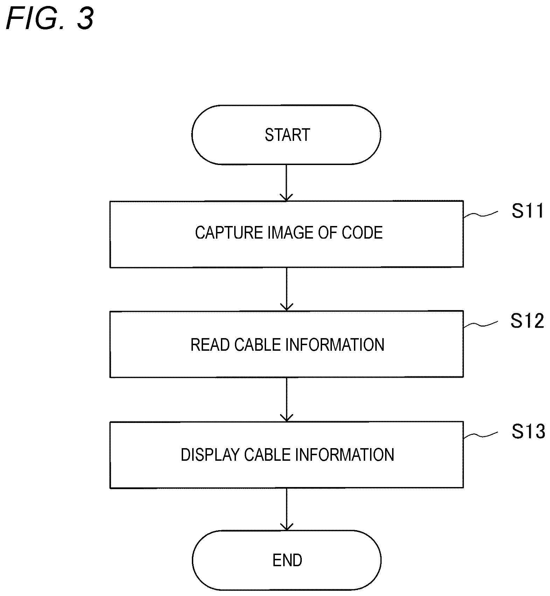

FIG. 2 is a diagram illustrating an example of a method of reading the cable information stored in the code 15 illustrated in FIG. 1. FIG. 3 is a flowchart illustrating an example of the flow of the operation of reading the cable information stored in the code 15 illustrated in FIG. 1.

As illustrated in FIG. 2, in the sheath 12, for example, the laser engraving is performed at a plurality of positions at predetermined intervals along the longitudinal direction of the optical fiber cable 1. The predetermined interval is in a range of 30 cm to 1 m, for example. In a plurality of codes 15 attached to the same optical fiber cable 1, for example, the same cable information may be stored, or different cable information may be stored.

Referring to FIGS. 2 and 3, first, before or during the installation work, a worker who performs the installation of the optical fiber cable 1 checks one of the plurality of codes 15 and captures an image of the code 15 using a device 21 such as a smartphone having an imaging function and a display function (step S11).

Next, after capturing the image of the code 15, the device 21 reads the cable information stored in the code 15 (step S12). Then, for example, the device 21 displays the read cable information on a screen provided in the device 21 (step S13). In FIG. 3, as an example, a list of the manufacturing company, the manufacturing year, the number of optical fibers, the allowable tension, and the allowable bending diameter of the optical fiber cable 1 is displayed on the screen.

As described above, the cable information is displayed on the screen of the device 21, so that the worker can easily check the information related to the installation of the optical fiber cable 1 before or during the installation work. The device 21 is not limited to the smartphone, and may be an argumented reality (AR) glass or the like.

On the sheath 12, a two-dimensional code or a one-dimensional code other than the QR code may be laser-engraved, or characters related to the optical fiber cable 1 may be laser-engraved. In addition, the code 15 may store a uniform resource locator (URL) of a WEB page in which the cable information is described, or the like. In this case, for example, after capturing the image of the code 15, the device 21 can display, based on the URL or the like stored in the code 15, the WEB page in which the cable information is described on the screen.

The code 15 may store identification information of the optical fiber cable 1 (hereinafter referred to as "cable ID"), an Internet Protocol (IP) address of an external server that manages the cable information, and the like.

In this case, for example, the device 21 can read the cable ID and the IP address stored in the code 15 and request, based on the cable ID and the IP address, the cable information of the optical fiber cable 1 from the external server via the network. When receiving the cable ID transmitted from the device 21, the external server can transmit the cable information of the optical fiber cable 1 corresponding to the cable ID to the device 21, and the device 21 can display the cable information transmitted from the external server on the screen.

The worker can acquire information related to cable pumping having a more detailed content such as an expected pumping distance or attention information during pumping by inputting into the device 21 various types of information such as a model of a pumping device, a pumping route, a diameter of the subduct 2, a radius of curvature of the subduct 2, and an outside air temperature.

Specifically, when the cable ID and the IP address stored in the code 15 are read, the device 21 transmits, based on the IP address, the above-described various kinds of information input by the worker and the cable ID to the external server.

The external server stores, for example, a database in which various kinds of information related to the installation, the cable ID, the expected pumping distance, an attention point during the pumping, a result of a past pumping test, and the like are associated. When the various kinds of information and the cable ID transmitted from the device 21 are received, the external server can read, based on the various kinds of information and the cable ID, the expected pumping distance and the attention point during the pumping, and transmit the read content to the device 21. Accordingly, more detailed information related to cable pumping can be presented to the worker.

To access the database in the external server, a dedicated portal site may be utilized, and a system in which only an authorized person can log in may be adopted.

The present disclosure has been described above based on the specific embodiment. However, the present invention is not limited to these exemplifications, but is indicated by the scope of claims, and is intended to include all modifications within a scope and meaning equivalent to the scope of claims.

### REFERENCE SIGNS LIST

1: optical fiber cable
2: subduct
3: main duct
11: cable core
12: sheath
13: optical fiber
14: water absorption tape
15: code
16: optical fiber ribbon
21: device

## Claims

1. An optical fiber cable comprising:
a cable core; and
a sheath formed around the cable core,
wherein a dynamic friction coefficient between optical fiber cables is 0.5 or less, and
wherein information related to the optical fiber cable is laser-engraved on the sheath.

2. The optical fiber cable according to claim 1,
wherein the dynamic friction coefficient is 0.3 or less.

3. The optical fiber cable according to claim 1 or 2,
wherein a two-dimensional code configured to store the information related to the optical fiber cable is laser-engraved on the sheath.

4. The optical fiber cable according to any one of claims 1 to 3,
wherein the sheath is made of a material in which an additive amount of carbon is smaller than 2 mass%.

5. The optical fiber cable according to any one of claims 1 to 4,
wherein the sheath is made of a material in which an additive amount of silicone is in a range of 0.1 mass% to 0.5 mass%.

6. The optical fiber cable according to any one of claims 1 to 5,
wherein the sheath is made of a material to which a laser photosensitizer is added.

7. The optical fiber cable according to any one of claims 1 to 6,
wherein information related to installation of the optical fiber cable is laser-engraved on the sheath.

8. An information management method for an optical fiber cable, the optical fiber cable comprising a cable core and a sheath formed around the cable core, a dynamic friction coefficient between optical fiber cables being 0.5 or less, cable information related to the optical fiber cable being laser-engraved on the sheath, the information management method comprising:
a step of reading the cable information; and
a step of displaying the cable information.
